# EUROPEAN PATENT SPECIFICATION

(11) **EP 2 267 640 B1**
(45) Date of publication and mention of the grant of the patent: **21.08.2013**
(21) Application number: 10164166.0
(22) Date of filing: 27.05.2010
(51) Int. Cl.: G06K 17/00, A01G 1/06

(54) **A process for inserting radio frequency microchips (RFID) in grape cutting-grafts**
Ein Verfahren zum Einbringen von Radiofrequenz-Mikrochips (RFID) in Rebstockverpfropfungen
Procédé d'insérer des microcircuits à radiofréquence (RFID) dans des greffages de vigne

(30) Priority: 28.05.2009 IT RM20090271
(43) Date of publication of application: 29.12.2010
(73) Proprietor: UNIVERSITA' DI PISA, 56126 Pisa (IT)
(72) Inventor: Triolo, Enrico, 56123 Pisa (IT); Rinaldelli, Enrico, 50060 Pelago (FI) (IT); Bandinelli, Roberto, 50018 Scandicci (FI) (IT); Gini, Barbara, 56040 Cenaia (PI) (IT)
(74) Representative: Germinario, Claudio

(56) References cited:
- BANDINELLI DR. ROBERTO ET AL: "L'impiego delle radiofrequenze nel vivaismo viticolo" AGRONOTIZIE, [Online] 9 May 2008 (2008-05-09), XP002564415 Retrieved from the Internet: URL:http://agronotizie.imagelinenetwork.co m/vivaismo-e-sementi/l-impiego-delle-radio frequenze-nel-vivaismo-viticolo-05205.cfm> [retrieved on 2010-01-19]
- GRIECO P.D.: "Tecnologia Rfid: nuove frontiere per la tracciabilità in agricoltura" AGRIFOGLIO - AGRINNOVA, [Online] no. 27, May 2008 (2008-05), - June 2008 (2008-06) pages 20-21, XP002564416 Retrieved from the Internet: URL:http://www.agrobios.it/documentazione/ files/20_21_rfid.pdf> [retrieved on 2010-01-19]

## Description

The present invention relates to a process for inserting identification devices, in particular radio frequency microchips RFId (Radio Frequency Identification) in grape-cutting grafts with the aim of identifying the grafted plants.

### State of art

The traceability needs of the grapevine field have grown together with the development of the same towards a greater and greater quality. The basic purpose was, and it is still now, to identify the single implant and the respective origin thereof during the plant life. Among the several currently used methods the adoption of small labels constitutes the most used means to identify the grapevine material put on the market. However, the system, even if it is simple and not expensive, is not without drawbacks, such as change in time in colour and writings, possibility of losing and tampering as well as the information content which, considering the limited writing surface, is limited to bare necessities. Furthermore, the small labels mark not the single plant, but several plants united by means of laces. Such problems, together with the greater and greater traceability needs, have suggested to search for new identification methods able to provide, as from the formation of each single plant, for a more complete and updated framework of pieces of information.

Recently, on arboreal species different from the grape, the use of the radiofrequency (RFId) technology has been proposed (Bowman K.D. (2005). Identification of woodly plants with implanted microchips. Technology and product reports, 15(2): 352-354. 2005; Greco et al., 2006, WO2007/042327).

In particular, by referring to WO2007/042327 the following differences can be highlighted
*a.* The plant parts potentially subjected to the microchip implementation, are designated generically, not differentiating the insertion methodology in relation to the plant structure. In the present invention the need for interacting with the rootstock, in case of applications of grape plants, as specified.
*b.* Tissue area wherein the microchip remains: the microchip is positioned in the outest portion of the plant, under bark. Differently, in the present proposal, the microchip is specifically and exclusively positioned in the area of the plant pith.
*c.* inserting procedure: for inserting the microchip in the trunk, cuts carried out under bark similar to Bowman and cross perforations of the trunk are proposed, in order to create housings apt to contain the microchips. The procedures of the present invention, for features and purposes, result to be wholly different.

This last document substantially refers to plants with woody trunk for which the modes for inserting the microchip inside the plant cannot damage the plant itself and the implant. BANDINELLI DR. ROBERTO ET AL: "L'impiego delle radiofrequenze nel vivaismo viticolo" AGRONOTIZIE, [Online] 9 May 2008 (2008-05-09), discloses a process for inserting RFID chips in a graft of a grape cutting. This document is an article published on the Web Magazine concerning in general terms the use of radiofrequency in grape vineyard (vivaismo). The article basically is a report of the development of a project which has the aim of tracing the grape cuttings in specific area (Tuscany).

Therefore, the previous experiences can be considered preliminary surveys performed however onto plants able, without damages, to cope with cuts analogous to those performed for the bud grafts, or trunk cross drillings, placing then in a very different context than that of the grapevine nursery system, therefor the just reported intervention typologies result to be hardly proposable. For the anatomical and dimensional features of the young grape propagules, the cross drilling would cause a considerable damage to the tissues, apart from needing a process for closing the hole and consequent visible healing. Apparently, even the insertion of the chip "*under barK*" cannot be implemented on grape due to the features themselves of the tissues and due to the trunk sizes: lifting the bark layers would create however a very limited space, by creating a considerable swelling due to the chip positioning, which however would be poorly coated by the thin and fragile bark. In other terms, the microchip "welding" inside the plant would be very weak, mostly locked inside thereof by callus. At last, even from an "aesthetical" point of view, the intervention visibility could result to be commercially unpleasant.

To solve the problems reported in the prior art and related to the difficulty in inserting microchips inside the grape propagules with the same graft typologies provided for arboreal plants with different trunk firmness, the inventors of the present invention have developed a different approach from the microchip insertion inside the plant by identifying a particular tissue for inserting the radio frequency microchip RFId inside the central pith of cutting grafts by making use of a specific methodology.

Therefore an object of the present invention is the process claimed in claim 1.

### Brief description of the figures

Two figures are enclosed with the present description, showing:
figure 1 the microchip insertion in the hole made in the pith of the rootstock and
figure 2 a detail of a machine which can be used as help to insert microchips, in particular with the punch acting on the cutting graft, placed in the specific housing.

In particular, among the various tissues the inventors have identified and verified the most suitable area for the chip insertion by reducing or cancelling the stress effects consequent to the stable insertion of the electronic component in the grape and not influencing the graft development. The pith is constituted by abundant parenchymatous cells rich with starch destined to be emptied and to die and therefor enhanced wall sclerification phenomena take place. Furthermore, the pith, in the young grape cuttings, results to be sufficiently big to have available inside thereof an adequate space for receiving the chip.Two preferential paths have been detected to reach the pith: 1) the pith direct drilling from the apical cut surface of the rootstock and 2) the opening on the tangential plane of the cutting of the rootstock carried out by means of an elliptical cut involving all the tissues interposed between epidermis and pith. Both procedures are applied in an area of the rootstock below the graft point and they constitute the object of the present invention. The individuals marked with the microchip will be wholly undistinguishable from the subjects without marking.

The present invention is an innovative contribution to identify the grapevine material produced in nursery. For the first time the application of the radio frequency technology in its methodological and experimental aspects is shown, by obtaining real feedbacks both in terms of traceability and in terms of efficiency and resistance of the graft and of the plant. The work, performed on wide scale, has seen, as replacement of small labels, radiofrequency chips inserted directly and permanently in the plants. With them, the possibility of identifying each propagule produced in nursery and of tracing, even after the vineyard implant, the whole story of each plant. In fact, apart from the quick recognition, the TAG (Electronic Tagging) allows accessing to a specific database containing all information about the marked individual. As it appears from the results obtained in this first series of researches, the RFId technology can constitute a valid tool to satisfy, progressing with times, the quality and traceability needs of the grapevine-nursery sector.

### The used methods and components are described hereinafter

### Used microchips

GLASS TAG Transponder microchips have been used operating at the frequency of 125 kHz, characterized by a coating made of BIOGLASS determining a size of the whole TAG of 0,21 x 1,20 cm. Each chip is marked by an identifying univocal number, element essential for the traceability procedures.

### Identification of the microchips

Each commercial microchip is associated in advance to a progressive identifying number by means of a common electronic database, by assigning this specific number to a precise graft cutting type. This system makes it easier managing the long codes stored in the microchips.

### System for reading the microchips

For reading the TAG a Card Flash reader has been chosen with reading and writing functions, able to detect and read the microchips at a distance which, depending upon the TAG position and upon possible interfering elements, is about 5 cm. The reader is connected to a hand-held computer (Dell Axim X51) wherein there is a specific software able to perform different functions.

### Vegetable material

The procedure is implemented on grape-cutting grafts, constituted by a cutting and by a one year old rootstock, commercially produced according to the usual nursery practices. The procedure for inserting the microchips takes place during the period preceding the forcing operation of the cutting grafts and it can be implemented according to one of the following methods.

### Procedure (A) for inserting the microchip: materials

Electric drill, hand-held or with fixed position, equipped with tip with diameter of 2,5 mm. The drilling tip is equipped with a head placed at 2 cm from the top, to avoid drillings at higher depth. The apparatus is set at low speed for the piercing operation. In case of using the hand-held electric drill, it will be necessary locking the vegetable material onto the working plane.

### Procedure (A) for inserting the microchip: method

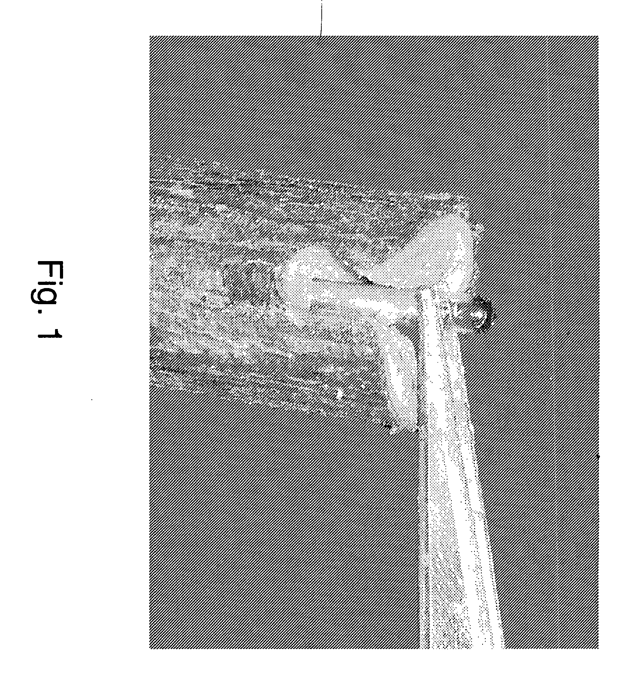

1. The rootstock is locked onto the working plane in case the hand-held drill is used, by showing the graft point to the operator. Otherwise, one can proceed directly by resting the graft point onto the drill tip with fixed position.
2. By using the above-described apparatus, a hole inside the rootstock pith is made, starting as from the graft point, as far as touching the head, for a depth of 2 cm. The drilling has to remove the pith only.
3. The rootstock is extracted from the drill tip and in the obtained volume one proceed with the manual insertion of the TAG (figure 1).
4. Then, the graft is carried out by creating a graft cutting which will be managed according to the usual nursery technique which will guarantee the correct welding of the two members.

### Procedure (B) for inserting the microchip: materials

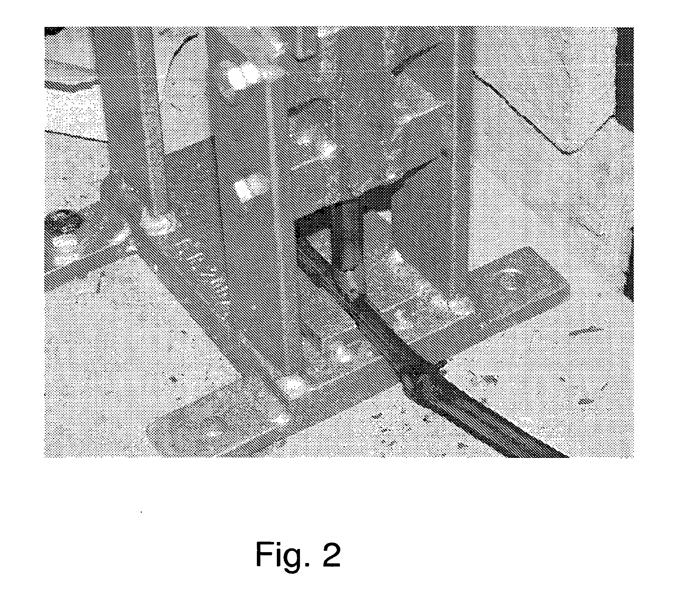

A self-manufactured machine under the form of prototype (figure 2) is used, able to carry out on one side of the distal portion of the graft cutting a cut with elliptical shape deep as far as the pith, using a special punch moved by a lever, The machine is equipped with a housing for the graft cutting. It is necessary using a tool with hook-like tip for removing the pith.

### Procedure (B) for inserting the microchip: method

1. The rootstock is housed in the specific space of the above described machine.
2. It is controlled that the plant is positioned so that the punch acts 2 cm below the graft point.
3. The lever is actuated to make the elliptical cut and to obtain the volume necessary for introducing the TAG, by removing the pith with the hook-like tool.
4. Manual insertion of the TAG and "re-composition" of the bark with the tissues initially removed from the press tip. At this point one carries out the grafting for constituting the graft cutting.

### Control operation

1. The graft operator can act manually by causing a slight pressure with the fingers onto the grafted cutting. If the insertion operation has taken place correctly, that is if the drillings have mainly involved the pith tissue, the system will result to be stable, exactly like a traditional graft.
2. Reading the microchip at the end of operations. Being the functionality of the microchips guaranteed for a period longer than the plant life, the reading subsequent to the TAG insertion will confirm the integrity and functionality thereof.

### Applications

The Italian viticulture has necessarily to pass through a path of qualitative excellence, with strong typicalness content: the use of RFId can promote and qualify the marketing of the productions of certified propagules which will constitute, in the immediate future, the material destined to the new implants. The examined project, for the moment, is destined to the excellence nursery productions, but it has potentiality for the whole nursery-grapevine sector. The individuals modified with the presence of the TAGs will be wholly undistinguishable from the not marked plants and they will keep this electronic feature indissolubly for the whole existence thereof. Through this feature the plants could be monitored and could provide an enormous quantity of information such as, for example, information about the origin thereof, about the growth parameters, about the susceptibility to biotic and abiotic stresses, about the productive potentialities and so on.

Some advantages connected with the grape identification by means of radio frequencies could be highlighted by analyzing what prescribed by the law for producing the graft of the "certified" category. The individual plants with inserted microchip could be localized (with GIS systems, *Geographical Information System*) on a three-dimensional map, thus constituting a virtual implant. This system will allow visualizing the remote preparation, allowing to store and manage the sensible data which can be associated to the plants (identity, health state and certification, cultural practices, etc.) by using specific technical-sanitary cards and will further provide an extremely detailed, long-lasting and safe information mapping of the implant. An additional, very useful advantage for the vineyard *management* will be given by the possibility of intervening onto the virtual system even from the field itself, by updating and modifying the data associated to the subjects thanks to the use of a single tool able to read and manage information associated to the plants marked with the microchip. At last, the system will put at disposal of the users (grapevine nursery men, wine-growers, responsible people for phytosanitary services) the relevant information for each single grape plant marked with microchip directly *online*, by constituting *database* containing the technical-sanitary cards of each single plant, analogous to those associated to the virtual vineyard.

### Examples

Researches were performed in the years 2007 and 2008 at the nurseries in New Plants of Barbara Gini (Cenaia, Pisa) specialized in producing grape propagules. The experimentation related 5 TOS.CO.VIT clones: Sangiovese *I-SS-F9-A5-48,* Prugnolo gentile *I-Bruscello,* Colorino *I-US-FI-PI-10,* Trebbiano toscano *I-S. Lucia* 12 and Vernaccia of S. Gimignano *I-VP6.* Propagules of these clones were grafted onto base graft-holder 1103P, by implementing 500 propagules per couple.

The data related to the vegetative recovery (Table 1) are reported as relationship between subjects in state of active growing vis-a-vis to subjects which have not developed buds, and data about the bud growing (Table 2, Table 3), expressed as length of the first bud developed from the propagule, after 30 and 60 days from the transfer of the plants in propagule nursery.

**Table 1. Vegetative recovery of grape propagules expressed as relationship between plants in active growth on total plants (%), grouped by treatment typology.**

| **Vegetative recovery of propagules (%)** | | | | | |
|---|---|---|---|---|---|
| | **Sangiovese** | **Prugnolo G.** | **Colorino** | **Trebbiano T.** | **Vernaccia** |
| **Proc. A / Tag** | 90 ab* | 97 a | 87 a | 70 ab | 90 a |
| **Proc. A** | 97 a | 93 a | 90 a | 90 a | 70 a |
| **Proc. B / Tag** | 93 ab | 90 a | 77 a | 60 b | 67 a |
| **Proc. B** | 90 ab | 87 a | 57 b | 77 ab | 67 a |
| **Check** | 77 b | 100 a | 90 a | 77 ab | 90 a |

| | | | | | |
|---|---|---|---|---|---|
| * The values in the same column followed by the same letter do not differ significantly according to the Duncan's Multiple Range test (P=0.05). | | | | | |

**Table 2. Growth of the first propagule bud, expressed as length (cm), grouped by treatment typology**

| **Growth of the first bud (cm) - June 2007** | | | | | |
|---|---|---|---|---|---|
| | **Sangiovese** | **Prugnolo G.** | **Colorino** | **Trebbiano T.** | **Vernaccia** |
| **Proc. A / Tag** | 4.3 ± 1.2 a* | 2.7 ± 0.8 abc | 3.0 ± 1.0 a | 3.1 ± 0.9 a | 3.2 ± 0.9 a |
| **Proc. A** | 3.3 ± 1.2 b | 3.2 ± 1.3 a | 2.8 ± 0.9 ab | 3.5 ± 1.1 a | 3.1 ± 1.1 a |
| **Proc. B / Tag** | 3.8 ± 1.2 a b | 2.2 ± 1.0 c | 2.8 ± 0.8 ab | 3.3 ± 0.9 a | 2.8 ± 1.0 a |
| **Proc. B** | 3.4 ± 1.3 b | 2.4 ± 0.9 bc | 2.4 ± 1.1 ab | 2.9 ± 0.8 a | 2.9 ± 1.1 a |
| **Check** | 3.4 ± 1.1 b | 3.0 ± 1.1 ab | 2.4 ± 1.0 b | 3.5 ± 1.0 a | 2.5 ± 0.9 a |

| | | | | | |
|---|---|---|---|---|---|
| * The values in the same column followed by the same letter do not differ significantly according to the Duncan's Multiple Range test (P=0.05). | | | | | |

**Table 3. Growth of the first propagule bud, expressed as length (cm), grouped by treatment typology**

| **Growth of the first bud (cm) - July 2007** | | | | | |
|---|---|---|---|---|---|
| | **Sangiovese** | **Prugnolo G.** | **Colorino** | **Trebbiano T.** | **Vernaccia** |
| **Proc. A / Tag** | 26.0 ± 8.7 a* | 21.9 ± 8.1 ab | 20.8 ± 7.3 a | 22.0 ± 6.8 a | 27.3 ± 7.0 a |
| **Proc. A** | 30.0 ± 7.3 a | 21.6 ± 7.2 b | 17.6 ± 5.4 ab | 24.7 ± 7.5 a | 26.0 ± 6.3 ab |
| **Proc. B / Tag** | 29.4 ± 6.3 a | 26.5 ± 7.4 a | 19.4 ± 5.1 ab | 23.5 ± 7.1 a | 22.8 ± 5.8 bc |
| **Proc. B** | 25.3 ± 8.2 a | 23.4 ± 6.6 ab | 12.6 ± 4.5 c | 23.6 ± 5.9 a | 21.3 ± 8.0 bc |
| **Check** | 27.8 ± 8.9 a | 25.7 ± 5.7 ab | 16.7 ± 5.1 b | 25.2 ± 5.6 a | 21.1 ± 5.6 c |

| | | | | | |
|---|---|---|---|---|---|
| * The values in the same column followed by the same letter do not differ significantly according to the Duncan's Multiple Range test (P=0.05). | | | | | |

From reading these data it can be observed that the vegetative recovery of the marked subjects, generally, is wholly analogous to the reference subjects and only in two cases slightly lower. Therefore, the procedures performed for inserting the chip do not seem to influence the vitality of the propagules, as well as the growing of the first bud which has developed from the marked plants results to be comforting, wholly comparable to that which takes place on the check plants. In fact, only in 4 observations there are slightly lower growths than the reference subjects (mostly in Prugnolo Gentile): situation which, furthermore, does not result to be constant during observations and which currently does not seem then to be due to the typology treatment, but rather to environmental and/or uncertain factors.

Furthermore, the data related to the vegetative development of the propagules are shown (Table 4), expressed as fresh weight of the vegetation produced during the period which has elapsed between the last winter pinching and the explant from the propagule nursery, in January 2008.

**Table 4. Vegetative development expressed in fresh weight (g) of the propagules in the period which has elapsed between the last winter pinching and the explant**

| **Vegetative development (g) - January 2008** | | | | | |
|---|---|---|---|---|---|
| | **Sangiovese** | **Prugnolo G.** | **Colorino** | **Trebbiano T.** | **Vernaccia** |
| **Proc. A / Tag** | 11.0 ± 0.9 a* | 9.0 ± 1.1 a | 8.3 ± 0.8 a | 6.8 ± 0.5 ab | 8.0 ± 1.0 a |
| **Proc. A** | 12.1 ± 1.0 a | 8.4 ± 1.0 a | 8.2 ± 0.7 a | 9.0 ± 0.9 a | 7.7 ± 1.1 a |
| **Proc. B / Tag** | 11.9 ± 1.2 a | 11.1 ± 1,2 a | 8.1 ± 0.9 a | 5.6 ± 1.1 b | 7.0 ± 0.9 a |
| **Proc. B** | 9.4 ± 1.0 a | 9.9 ± 0.9 a | 5.9 ± 0,9 b | 7.1 ± 0.6 a | 7.3 ± 0.8 a |
| **Check** | 10.1 ± 1.3 a | 9.9 ± 1.2 a | 7.5 ± 0,6 a | 8.1 ± 1.0 a | 5.4 ± 0.7 b |

| | | | | | |
|---|---|---|---|---|---|
| * The values in the same column followed by the same letter do not differ significantly according to the Duncan's Multiple Range test (P=0.05). | | | | | |

From reading these data it can be observed that the vegetative recovery in the marked subjects, generally, is wholly analogous to the reference subjects and only in two cases slightly lower. The latter refer to the theses characterized by Procedure B which could designate a greater - even if limited - invasiveness with respect to Procedure A.

Subsequently to the explant of the propagules, histological observations were performed onto trunk sections cut at the height of the microchip inserting point. One could find that, for the propagules of I choice, procedure A does not seem to alter significantly the tissues, by limiting the damages only to the removal of the pith: in fact, also the primary xylem results to be almost always integer and the occasional damaged xylematic vessels appear to be no more frequent with respect to the check. Procedure B determines, as one could imagine, a necrotic area proximate to the cut point (the area of the "door"), the extension thereof, however, is incorporated by the new healthy tissues produced by the plant during the first year, by restoring the normal vegetative activity for the whole trunk diameter and, presumably, by limiting the damages in terms of vegetative growth.

The procedures performed for inserting the chip have not demonstrated to influence the propagule vitality, as well as the growth of buds and the biomass development do not seem to be altered. These evidences find an additional confirmation from the histological observations of the trunk cross sections performed at the point of inserting the chip, therefor significative differences between the studied procedures with respect to the check are not found.

### Reference bibliography

Bandinelli R., Triolo E., Rinaldelli E., Luvisi A., Pagano M., 2008. L'impiego delle radiofrequenze nel vivaismo viticolo. Agronotizie, 9 maggio 2008.
Bandinelli R., Triolo E., Rinaldelli E., Luvisi A., Pagano M., 2008. La tecnologia delle radiofrequenze (RFId) nella filiera vivaistico-viticola: una prima sperimentazione per la tracciabilità nel settore. Organic Eprints: 13950.
Triolo E., Luvisi A., Bandinelli R., Rinaldelli E., Pagano M., 2007. RFID technology for improving traceability in grapevine nursery sector. Journal of Plant Pathology 89(3): 46-47. I.F. 0.974
Luvisi A., 2007. Radiofrequency technology (RFID) in grapevine nursery for sector traceability. In: Proc. ID WORLD International Congress 2007, Milano, 26-28 novembre 2007.
Triolo E., Luvisi A., Bandinelli R., Rinaldelli E., Pagano M., 2007. RFID technology for improving traceability in grapevine nursery sector. In: Proc. 14th Congresso Nazionale SIPaV, Perugia, 18-21 settembre 2007, pp. 98.
Pagano, M., 2008. Identificazione e tracciabilità nella filiera vivaistico-viticola per mezzo di radiofrequenze (RFId) (Prima serie di ricerche. Tesi di laurea in Scienze e Tecnologie Agrarie, Università degli Studi di Firenze.
Grieco P. D., , Mendoliera S., Castoro V., Vitelli V., Cellini F., Agnello A., Buccigrossi F., Vigo G. (2006). La tecnologia RFld per la tracciabilità e la certificazione delle produzioni vivaistiche. Rivista di Frutticoltura, 10: 60-70.

### Bibliografia:

Buguk C., Ervin R. T., Eberspacher J. (1998). Economic analysis of an alternative cattle identification system used to decrease hide damage. J. Amer. Leather Chemists Asso., 93: 248-254.
Caceci T., Smith S.A., Toth T.E., Duncan R. B., Walker S.C. (1999). Identification of individual prawns with implanted microchip transponders. Aquaculture, 180: 41-51*.*
Jones, P., C. Clarke-Hill, D. Hillier and D. Comfort (2005), 'The benefits, challenges and impacts of radio frequency identification technology (RFID) for retailers in the UK', Marketing Intelligence & Planning, Vol.23 No.4, pp.395-402.
Kumagai M.H., Miller P. (2006). Development of electronic barcode for use in plant pathology and functional genomics. Plant Molecular Biology, 61: 515-523*.*
Purvis A.C., McGlasson W.B., Kanlayanarat S. (2006). Progressive challenges in horticultural supply chains: some future challenges. Acta Hort. 712(1): 39-49*.*
Sorenson M.A., Buss M. S, Tyler J.W. (1995). Accuracy of microchip identification on dogs and cats. J. Amer. Veterinary Medical Asso., 207: 766-767*.*

## Claims

1. A process for inserting a RFID microchip into a rootstock to be grafted with a grape cutting comprising the following operations:
a. preparing a rootstock,
b. forming a seat only in the pith of said rootstock in an area below the graft point,
c. inserting a microchip in said seat,
d. grafting the grape cutting to the rootstock by inserting the cutting in the prepared rootstock and checking the stable insertion of the cutting
e. entering data in said microchip to identify said cutting.

2. The process according to claim 1, wherein in said operation b. said seat is carried out by directly drilling the surface pith of said rootstock below a graft point.

3. The process according to claim 1, wherein in said operation b. said seat is carried out by cutting the rootstock from the bark to pith with a substantially elliptical cut of all tissue between epidermis and pith.

4. Grape cutting graft with a root stock obtained by the process as claimed in claims 1 to 3.

5. Grape plant comprising a grape cutting graft with a root stock as claimed in claim 4.

6. System for identifying grape plants after implementing graft with cutting comprising one or more control units and one or more plants as claimed in claim 5.

## Patentansprüche

1. Verfahren zum Einsetzen eines RFID-Mikrochips in einen Wurzelstock, der mit einem Weintraubensteckling gepfropft werden soll, das die folgenden Schritte umfasst:
a. Vorbereiten eines Wurzelstockes,
b. Bilden einer Aufnahme nur in dem Mark des Wurzelstockes in einem Bereich unterhalb des Pfropfpunktes,
c. Einsetzen eines Mikrochips in die Aufnahme,
d. Pfropfen des Weintraubenstecklings in den Wurzelstock durch Einsetzen des Stecklings in den vorbereiteten Wurzelstock und Prüfen des stabilen Einsatzes des Stecklings,
e. Eingeben von Daten in den Mikrochip, um den Steckling zu identifizieren.

2. Verfahren gemäß Anspruch 1, wobei in dem Schritt b. die Aufnahme durch ein direktes Bohren des Oberflächenmarks des Wurzelstockes unterhalb eines Pfropfpunktes ausgeführt wird.

3. Verfahren gemäß Anspruch 1, wobei in dem Schritt b. die Aufnahme durch ein Schneiden des Wurzelstockes von der Borke bis zum Mark mit einem im Wesentlichen elliptischen Schnitt aller Gewebe zwischen Epidermis und Mark ausgeführt wird.

4. Weintraubenstecklingspfropfung mit einem Wurzelstock, die durch das Verfahren gemäß Anspruch 1 bis 3 erhalten wird.

5. Weintraubenpflanze, die eine Weintraubenstecklingspfropfung mit einem Wurzelstock gemäß Anspruch 4 umfasst.

6. System zum Identifizieren von Weintraubenpflanzen nach einem Durchführen einer Pfropfung mit Schneiden, das eine oder mehrere Steuereinheiten und eine oder mehrere Pflanzen gemäß Anspruch 5 umfasst.

## Revendications

1. Procédé pour insérer une micro puce RFID dans un porte-greffe à greffer avec une bouture de vigne, comprenant les étapes suivantes consistant à :
a. préparer un porte-greffe,
b. former un siège uniquement dans la moelle dudit porte-greffe dans une zone située en-dessous du point de greffe,
c. insérer une micro puce dans ledit siège,
d. greffer la bouture sur le porte-greffe en insérant la bouture dans le porte-greffe préparé et en vérifiant l'insertion stable de la bouture,
e. entrer des données dans ladite micro puce pour identifier ladite bouture.

2. Procédé selon la revendication 1, dans lequel à ladite étape b., ledit siège est réalisé en perçant directement la moelle superficielle dudit porte-greffe au-dessous d'un point de greffe.

3. Procédé selon la revendication 1, dans lequel à ladite étape b., ledit siège est réalisé en coupant le porte-greffe de l'écorce à la moelle avec une coupe sensiblement elliptique de tous les tissus entre l'épiderme et la moelle.

4. Greffage de vigne avec un porte-greffe obtenu par le procédé selon les revendications 1 à 3.

5. Plant de vigne comprenant un greffage de vigne avec un porte-greffe selon la revendication 4.

6. Système pour identifier des plants de vigne après avoir mis en oeuvre la greffe avec la bouture comprenant une ou plusieurs unités de commande et un ou plusieurs plants selon la revendication 5.
